# EUROPÄISCHE PATENTSCHRIFT

(11) **EP 2 837 512 B1**
(45) Veröffentlichungstag und Bekanntmachung des Hinweises auf die Patenterteilung: **23.03.2016**
(21) Anmeldenummer: 14175721.1
(22) Anmeldetag: 04.07.2014
(51) Int. Cl.: B60C 23/00

(54) **Radaufhängung**
Wheel suspension
Suspension

(30) Priorität: 16.08.2013 DE 102013013509
(43) Veröffentlichungstag der Anmeldung: 18.02.2015
(73) Patentinhaber: CLAAS Tractor S.A.S., 78141 Vélizy-Villacoublay Cedex (FR)
(72) Erfinder: Sensel, Uwe, 39104 Magdeburg (DE); Verhorst, Jan-Willem, 59555 Lippstadt (DE); Fedde, Thomas, 33129 Delbrück (DE)

(56) Entgegenhaltungen:
- EP-A2- 2 308 698
- DE-U1-202011 051 737
- GB-A- 2 178 705
- US-A- 2 452 527

## Beschreibung

Die vorliegende Erfindung betrifft eine Radaufhängung für ein Fahrzeug, insbesondere für ein landwirtschaftliches Fahrzeug, mit einer in einer karosserieseitigen Hülse laufenden Welle und mit einer sich von der Hülse in die Welle erstreckenden Druckgas-Drehdurchführung.

Eine solche Drehdurchführung ermöglicht die Zufuhr von Druckluft von einer am Fahrzeug mitgeführten Druckluftquelle zu einem Luftreifen eines an der Radaufhängung montierten Rades bzw. das Ablassen von Luft aus dem Reifen. Insbesondere bei landwirtschaftlichen Fahrzeugen sind Anpassungen des Reifendrucks wünschenswert, um einerseits im Feldeinsatz die Bodenverdichtung durch eine große Aufstandsfläche des Reifens bei niedrigem Reifendruck zu minimieren, den Fahrwirkungsgrad und die Traktion zu verbessern und andererseits auf der Straße durch hohen Reifendruck kraftstoffsparendes Fahren zu ermöglichen.

Aus der US 2452527 A und der EP 2 308 698 A2 sind allgemein Vorrichtungen zur Regelung des Reifendruckes bekannt, bei denen über fahrzeug- und radseitige Druckleitungen eine Druckluftzufuhr ermöglicht wird.

Aus der DE 20 2011 051 737 U1 ist eine Drehdurchführung als Teil einer Reifendruckregelanlage eines Fahrzeuges bekannt, bei welcher über einen zwischen einer Rotor- und einer Statorbaugruppe ausgebildeten, ringförmigen Übertragungskanal einem Fahrzeugreifen Druckluft bereitgestellt werden kann.

Aus GB2178705A ist eine gattungsgemäße Radaufhängung mit einer karosserieseitigen Hülse, einer Welle und zwischen karosserieseitiger Hülse und Welle verlaufenden Druckgasführungen bekannt, bei der ein Ringraum, in den jeweils ein Kanal der karosserieseitigen Hülse und ein Kanal der Welle einmünden, in axialer Richtung durch Dichtungen begrenzt ist, die an einer Außenseite der Welle und einer Innenseite der Hülse flächig anliegen. Um ein Festklemmen, sei es aufgrund von Fertigungstoleranzen oder von Wärmeausdehnung, zu vermeiden, müssen solche Dichtungen gummielastisch mit verformbarem Querschnitt sein. Im Betrieb reibt entweder die Welle oder die Hülse ständig auf großer Oberfläche an der Dichtung. Die Dichtung verschleißt daher schnell und muss jeweils nach kurzer Standzeit ausgewechselt werden.

Aufgabe der Erfindung ist, eine Radaufhängung mit einer Druckgasdurchführung zu schaffen, die einfach aufgebaut ist und lange Standzeiten ohne die Notwendigkeit eines Dichtungswechsels erreicht.

Die Aufgabe wird gelöst, indem bei einer Radaufhängung für ein insbesondere landwirtschaftliches Fahrzeug mit einer karosserieseitigen Hülse und einer in der Hülse laufenden Welle, wobei eine Druckgasdurchführung einen von Hülse und Welle begrenzten Ringraum und in den Ringraum einmündende Kanäle der Hohlachse und der Welle umfasst, und der Ringraum durch wenigstens einen die Hülse und die Welle berührenden Dichtring abgedichtet ist, eine Außenfläche des Dichtrings in entspanntem Zustand komplementär zu einer im montierten Zustand von ihr berührten Innenfläche der Hülse geformt ist, um im montierten Zustand eine ausgedehnte Dichtfläche ohne die Notwendigkeit der Querschnittsverformung des Dichtrings zu gewährleisten, und der Durchmesser der Außenfläche im entspannten Zustand so groß wie oder größer ist als der Durchmesser der Innenfläche der Hülse, so dass im montierten Zustand die Außenfläche des Dichtrings an der Innenfläche der Hülse flächig dichtend anliegt.

Wenn der Durchmesser der Außenfläche des Dichtrings im entspannten Zustand größer ist als der Durchmesser der Innenfläche der Hülse, bewirkt im montierten Zustand eine radiale Stauchung des Dichtrings, dass diese gegen die Innenfläche der Hülse beaufschlagt ist, was die Dichtwirkung verbessert.

Einer alternativen Lösung zufolge ist bei einer Radaufhängung für ein insbesondere landwirtschaftliches Fahrzeug mit einer karosserieseitigen Hülse und einer in der Hülse laufenden Welle, wobei eine Druckgasdurchführung einen von Hülse und Welle begrenzten Ringraum und in den Ringraum einmündende Kanäle der Hohlachse und der Welle umfasst, und der Ringraum durch wenigstens einen die Hülse und die Welle berührenden Dichtring abgedichtet ist, eine Innenfläche des Dichtrings in entspanntem Zustand komplementär zu einer im montierten Zustand von ihr berührten Außenfläche der Welle geformt, um im montierten Zustand eine ausgedehnte Dichtfläche ohne die Notwendigkeit der Querschnittsverformung des Dichtrings zu gewährleisten, und der Durchmesser der Innenfläche ist im entspannten Zustand so groß wie oder kleiner als der Durchmesser der Außenfläche der Welle, so dass im montierten Zustand die Innenfläche des Dichtrings an der Außenfläche der Welle flächig dichtend anliegt.

Vorzugsweise beruht die Komplementarität der Außenfläche des Dichtrings und der Innenfläche der Hülse (bzw., im Fall der Alternativlösung, der Innenfläche des Dichtrings und der Außenfläche der Welle) darin, dass im axialen Schnitt beide parallel und geradlinig verlaufen. Die Parallelität ermöglicht einen großflächigen Kontakt, die Geradlinigkeit erleichtert eine axiale Verschiebung des Dichtrings in der Hülse (bzw. entlang der Welle) während der Montage.

Zwischen einer Innenfläche des Dichtrings und einer durch die Öffnung des Dichtrings verlaufenden Außenfläche der Welle ist vorzugsweise ein Spalt vorhanden, um Fertigungstoleranzen zu kompensieren bzw. um im Betrieb Platz für ein unterschiedliches thermisches Ausdehnungsverhalten von Dichtring, Hülse und Welle zu bieten. Im Falle der Alternativlösung könnte ein entsprechender Spalt zwischen der Außenfläche des Dichtrings und der Innenfläche der Hülse vorgesehen sein.

Bevorzugt ist die Lösung, bei der die Außenfläche des Dichtrings an der Innenfläche der Hülse dichtend anliegt, da hier Fliehkräfte, die im Betrieb auf den Dichtring einwirken können und diesen radial nach außen treiben, die Dichtwirkung verbessern. Im Folgenden wird daher nur noch diese Lösung betrachtet.

Um auf Seiten der Welle zu dichten, liegt der Dichtring vorzugsweise an einer radial orientierten Oberfläche der Welle an. Zweckmäßigerweise kann eine Seitenfläche des Dichtrings, die an dieser Oberfläche anliegt, die vom Ringraum abgewandte Seitenfläche des Dichtrings sein, so dass der Dichtring durch einen in dem Ringraum herrschenden Überdruck gegen die radial orientierte Oberfläche beaufschlagt wird. Dadurch wird zum einen erreicht, dass der Dichtring um so fester gegen die radial orientierte Oberfläche gedrückt wird - und folglich um so wirksamer dichtet - je höher der Druck im Ringraum ist; andererseits wird der Anpressdruck zwischen Dichtring und Oberfläche minimal oder gar Null, wenn der Ringraum drucklos ist, wodurch Reibungsverluste bei der Bewegung des Rades und Reibverschleiß des Dichtrings minimiert werden.

Um den Zusammenbau der Radaufhängung und insbesondere die Platzierung des Dichtrings beim Zusammenbau der Radaufhängung zu erleichtern, kann der Dichtring in einer Nut der Welle aufgenommen sein. Der auf diese Weise an der Welle in axialer Richtung fixierte Dichtring kann zusammen mit der Welle in die Hülse axial eingeschoben werden. Die oben erwähnte Außenfläche der Welle ist dann vorzugsweise der Boden dieser Nut, und der Dichtring kann an einer Seitenwand der Nut dichtend anliegen.

Vorzugsweise ist der Dichtring in der Nut mit axialem Spiel aufgenommen. Dadurch kann insbesondere Druckgas aus dem Ringraum in den Spalt am Boden der Nut eindringen und den Dichtring zusätzlich gegen die Innenfläche der Hülse anpressen. Außerdem bietet ein Spalt zwischen einer dem Ringraum zugewandten Seitenfläche der Dichtung und einer gegenüberliegenden Seitenwand der Nut eine große Angriffsfläche für das Druckgas, um den Dichtring an die vom Ringraum abgewandte Seitenwand der Nut anzupressen.

Der Dichtring ist in der fertig montierten Radaufhängung vorzugsweise relativ zur Hülse im wesentlichen drehfest. Da diese Drehfestigkeit auf Reibschluss zwischen der Außenfläche des Dichtrings und der Innenfläche der Hülse zurückgeht, ist Schlupf nicht völlig auszuschließen. Wenn folglich der Dichtring nicht mit der Welle rotiert, tritt Reibung im Wesentlichen nur zwischen einer der Stirnflächen des Dichtrings und der dieser gegenüberliegenden Seitenwand auf. Falls es hier zu Materialabtrag durch Reibung kommt, führt dieser allenfalls zu einem vergrößerten axialen Spiel des Dichtrings, beeinträchtigt aber nicht die Kraft, mit der die Dichtflächen des Dichtrings und der Welle gegeneinander gedrückt sind, und hat daher keinen oder allenfalls geringen Einfluss auf die Dichtigkeit.

Der Dichtring kann in Umfangsrichtung unterbrochen sein. Eine solche Unterbrechung erleichtert ein zum Montieren des Dichtrings an der Welle erforderliches radiales Aufweiten bzw. das radiale Stauchen des Dichtrings beim Einführen in die Hülse, auch wenn der Dichtring, wie erfindungsgemäß bevorzugt, aus einem nur begrenzt elastisch biegsamen Material ohne nennenswerte gummielastische Verformbarkeit gefertigt ist.

Vorzugsweise ist die Unterbrechung des Dichtrings so bemessen, dass einander beiderseits der Unterbrechung gegenüberliegende Stirnflächen des Dichtrings einander im montierten Zustand, d.h. wenn der Dichtring im Kontakt mit der Innenfläche der Hülse radial gestaucht ist, berühren. Dies trägt zur Minimierung der Leckrate der Dichtung bei.

Die Welle kann zweckmäßigerweise eine Kernwelle und eine auf die Kernwelle aufgeschobene zweite Hülse umfassen, im folgenden zur Unterscheidung von der oben erwähnten karosserieseitigen Hülse als radseitige Hülse bezeichnet. Wenn der Kanal der Welle in dieser radseitigen Hülse verläuft, ist es nicht notwendig, einen solchen Kanal in der Kernwelle zu bohren. Da die Kernwelle im allgemeinen das Gewicht des Fahrzeugs trägt und dementsprechend aus einem hoch belastbaren Material gefertigt ist, kann dies die Fertigung der Radaufhängung deutlich erleichtern.

Der Dichtring kann aus Metall bestehen.

Um eine reibungs- oder zumindest verschleißarme Oberfläche des Dichtrings zu erhalten, kann dieser aber auch zumindest an seiner Oberfläche aus Kunststoff, insbesondere aus Polyimid oder PTFE bestehen.

Allgemein ist die Verwendung eines graphithaltigen Materials zumindest für die Oberfläche des Dichtrings aufgrund der Schmiereigenschaften des Graphits sinnvoll. Graphitkristalle können in Metall, insbesondere in Grauguss, enthalten sein, sie können aber auch als Füllstoff in eine Kunststoffmatrix, etwa aus Polyimid oder PTFE, eingebettet sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen axialen Schnitt durch eine Radaufhängung gemäß einer ersten Ausgestaltung der Erfindung;
- Fig. 2: ein vergrößertes Detail aus Fig. 1;
- Fig. 3: einen axialen Schnitt gemäß einer zweiten Ausgestaltung;
- Fig. 4: eine perspektivische Ansicht eines in der Radaufhängung von Fig. 1 oder 2 verwendbaren Dichtrings; und
- Fig. 5: eine perspektivische Ansicht eines anderen verwendbaren Dichtrings.

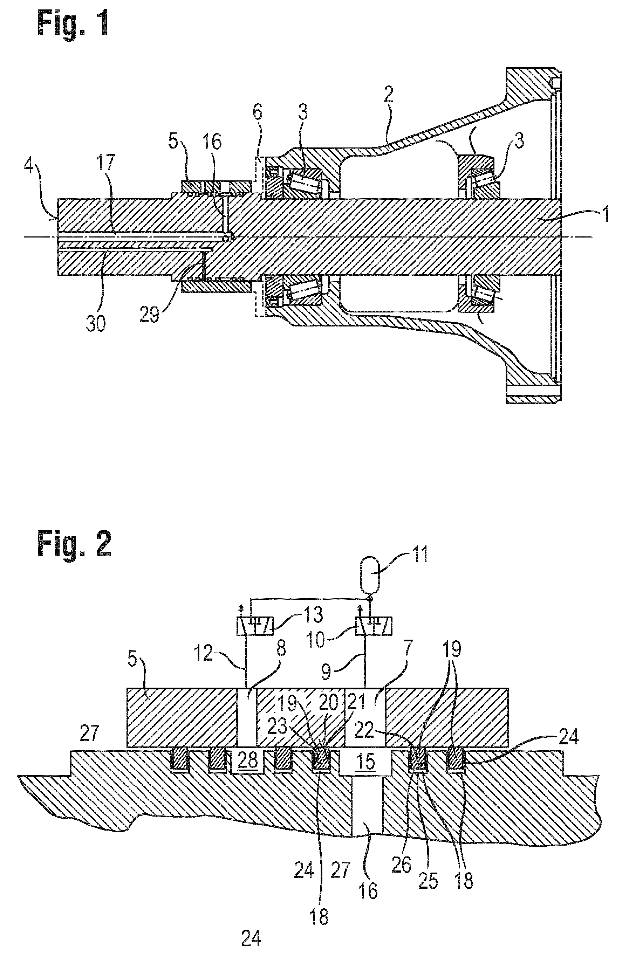

Fig. 1 zeigt in einem Schnitt entlang ihrer Drehachse eine Welle 1, die hier Teil einer Hinterachse eines landwirtschaftlichen Fahrzeugs wie etwa eines Traktors ist. Ein rechter Teil der Welle 1 ist in einem Hinterachstrichter 2 mittels zweier Wälzlager 3 drehbar gehalten. Der Hinterachstrichter 2 ist Teil eines Gehäuses, das ein die Welle 1 antreibendes, in der Figur nicht dargestelltes Differenzialgetriebe aufnimmt. Ein am linken Ende der Welle 1 befestigtes Hinterrad ist, da von an sich bekanntem Aufbau, in der Figur nicht dargestellt. Es umfasst eine mittelbar oder unmittelbar an der Welle 1 befestigte Radschüssel, eine sich rings um die Radschüssel erstreckende Felge und einen in der Felge verankerten Luftreifen.

Benachbart zu einer Spitze des Hinterradtrichters 2 ist eine Hülse 5 auf die Welle 1 aufgeschoben. Die Hülse 5 ist an der Karosserie des Traktors befestigt, so dass sie nicht gemeinsam mit der Welle 1 rotiert. Eine solche Verbindung kann zum Beispiel, wie in Fig. 1 durch gestrichelte Linien angedeutet, durch einen mit der Hülse 5 zusammenhängenden und an der Spitze des Hinterachstrichters 2 zum Beispiel durch Schrauben befestigten Flansch 6 gebildet sein.

Fig. 2 zeigt die Hülse 5 und einen von ihr umgebenen Abschnitt der Welle 1 in einem vergrößerten Schnitt. Die Hülse 5 weist zwei radiale Bohrungen 7, 8 auf. Die Bohrungen 7 und 8 sind über schematisch dargestellte Rohr- oder Schlauchleitungen 9, 12 und Wegeventile 10, 13 wahlweise mit einer Druckluftquelle 11 des Traktors, zum Beispiel einem von dessen Motor angetriebenem Verdichter, oder mit der Umgebung verbunden.

Im Innern der Hülse 5 mündet die Bohrung 7 in einen Ringraum 15, der einerseits von der zylindrischen Innenfläche der Hülse 5, andererseits von einer in die Welle 1 eingetieften Nut begrenzt ist. Eine vom Boden dieser Nut ausgehende Stichbohrung 16 führt zu einer axialen Bohrung 17, die mit der Luftkammer des Reifens über ein nicht dargestelltes Reifenfüllventil verbunden ist.

Beiderseits des Ringraums 15 sind weitere Nuten 18 am Umfang der Welle 1 gebildet, die jeweils einen Dichtring 19 enthalten. Die Dichtringe 19 haben jeweils einen rechteckigen Querschnitt. Ihr Außendurchmesser ist in entspanntem Zustand geringfügig größer als der Innendurchmesser der Hülse 5, so dass zylindrische Außenflächen 20 der Dichtringe 19 elastisch gegen die Innenfläche der Hülse 5 angepresst sind und über ihre gesamte axiale Ausdehnung hinweg mit dieser Innenfläche in dichtendem Kontakt stehen.

Zwischen einer Innenfläche 22 der Dichtringe 19 und einem gegenüberliegenden Boden 25 der sie aufnehmenden Nut 18 erstreckt sich ein Spalt 26. Der Abstand zwischen Seitenflächen 21, 23 der Dichtringe 19 ist jeweils etwas kleiner als der zwischen diesen Seitenflächen 21, 23 gegenüberliegenden Seitenwänden 24, 27 der Nuten 18.

Wenn der Ringraum 15 mit Druckluft beaufschlagt ist, dann erreicht diese auch zumindest die dem Ringraum 15 zugewandten Stirnflächen 21 der zwei unmittelbar zum Ringraum 15 benachbarten Dichtringe 19 und treibt diese vom Ringraum 15 fort, so dass die äußeren Seitenflächen 23 dieser Dichtringe 19, wie in Fig. 2 dargestellt, in dichtenden Kontakt mit den ihnen zugewandten Seitenwänden 24 der Welle 1 treten. Gleichzeitig liegt der Druck der Druckluft auch an der Innenfläche 22 dieser Dichtringe 19 an und erhöht so den Druck, den ihre Außenflächen 20 auf die Hülse 5 ausüben. In Folge der daraus resultierenden hohen Reibung rotieren die Dichtringe 19, von eventuellem Schlupf abgesehen, nicht mit der Welle 1, so dass Reibverschleiß nicht an den Außenflächen 20 stattfindet, sondern auf die Stirnflächen 23 und Seitenwände 24 beschränkt bleibt.

Im hier betrachteten Fall sind auf jeder Seite des Ringraums 15 je zwei Nuten 18 und Dichtringe 19 vorgesehen. In den jeweils nicht unmittelbar zum Ringraum 15 benachbarten Nuten 18 sind die Dichtringe 19 in einer mittigen Stellung, ohne direkten Kontakt zu den Seitenwänden 24, 27 dargestellt. Eine solche Stellung nehmen die Dichtringe 19 aufgrund axialen Spiels zwischen der Welle 1 und der Hülse 5 während der Bewegung des Fahrzeugs selbsttätig ein; in dieser Stellung sind sie vor Reibverschleiß geschützt. Nur im Falle einer Undichtigkeit der zum Ringraum 15 nächst benachbarten Dichtringe 19 treibt der hohe Luftdruck des Ringraums 15 auch die weiter entfernten Dichtringe 19 auseinander, so dass diese mit den Seitenwänden 24 ihrer Nuten 18 in Dichtkontakt treten und so die Funktion der undicht gewordenen unmittelbar zum Ringraum 15 benachbarten Ringe 18 übernehmen. Da Reibverschleiß nur dann auftreten kann, wenn die Dichtringe 19 tatsächlich hohem Luftdruck aus dem Ringraum 15 ausgesetzt sind, liegt auf der Hand, dass die Standzeit der Radaufhängung durch eine weitere Vermehrung der Dichtringe 19 und Nuten 18 noch weiter gesteigert werden könnte.

Die Bohrung 8 mündet in einen zweiten sich um die Welle 1 herum erstreckenden Ringraum 28, der über Bohrungen 29, 30 mit einem Steueranschluss des Reifenfüllventils verbunden ist. Wenn der Reifendruck geändert werden soll, wird über das Wegeventil der Ringraum 28 mit Druckluft aus der Druckluftquelle beaufschlagt. Deren Druck breitet sich über die Bohrungen 29, 30 bis zum Reifenfüllventil aus, so dass dieses öffnet und je nach Stellung des Wegeventils 10 Druckluft in den Reifen oder aus diesem abfließen kann. Der dabei im Ringraum 28 auftretende hohe Druck treibt in analoger Weise wie oben für den Ringraum 15 beschrieben die nächstbenachbarten Dichtringe 19 auseinander und ihre vom Ringraum 28 abgewandten Seitenflächen in dichten Kontakt mit Seitenwänden ihrer Nuten 18.

Die Zahl der Dichtringe 19 zwischen den Ringräumen 15, 28 könnte abweichend von der Darstellung in Fig. 1 auch auf einen reduziert sein, da ein solcher einzelner Ring an unterschiedlichen Seiten dichtet, je nachdem, in welchem der Ringräume 15, 28 der Druck höher ist, und nicht zu dichten braucht, wenn in beiden Ringräumen 15, 28 derselbe hohe Druck herrscht.

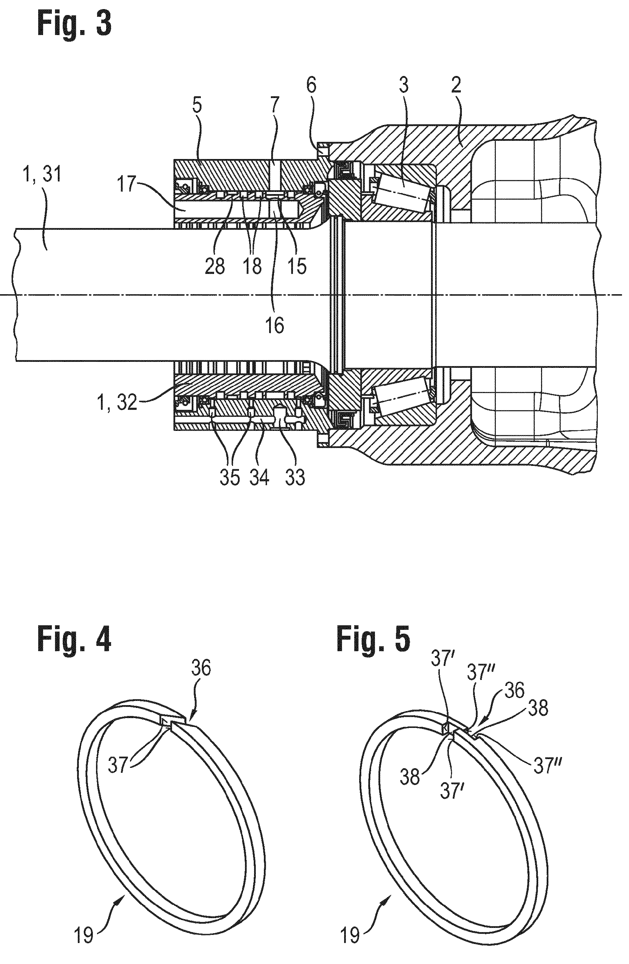

Fig. 3 zeigt einen zu Fig. 1 analogen Schnitt durch eine Radaufhängung gemäß einer zweiten Ausgestaltung der Erfindung. Die Welle 1 ist hier mehrteilig aufgebaut und umfasst ein hier als Kernwelle 31 bezeichnetes Teil, welches Kräfte und Drehmomente des Fahrzeugs auf das nicht dargestellte, über geeignete Vorrichtungen mit der Kernwelle 31 verbundene Rad überträgt, und eine sich innerhalb der Hülse 5 erstreckende, auf die Kernwelle 31 aufgeschobene Hülse, hier zur Unterscheidung von der sie umgebenden karosseriefesten Hülse 5 als radseitige Hülse 32 bezeichnet. Im Gegensatz zur Kernwelle 31 hat die radseitige Hülse 32 keine tragende Funktion und kann daher aus einem Material gefertigt sein, in dem die Nuten 18 und Ringräume 15, 28 leicht zu fertigen sind.

Wie in der Figur gezeigt, können auch die von dem Ringraum 15 zum Reifen führenden Bohrungen 16, 17 in der radseitigen Hülse 32 gebildet sein. Gleiches gilt für die in Fig. 3 nicht sichtbaren, mit dem Ringraum 28 zusammenhängenden Bohrungen 29, 30.

Fig. 3 zeigt des weiteren Bohrungen 33, 34, 35 in der karosserieseitigen Hülse 5, die einen Kanal zur Verteilung von Schmiermittel bilden. Druckbeaufschlagtes Schmiermittel, das über die Bohrung 33 in die Hülse 5 eintritt, verteilt sich in deren Längsrichtung über die Bohrung 34 und tritt an der Innenfläche der Hülse 5 jeweils benachbart zu denjenigen Stirnflächen 24 der Dichtringe 19 aus, die von einem Überdruck in einem der Ringräume 15, 28 an die Seitenwand ihrer Nut angepresst werden.

Fig. 4 zeigt ein Beispiel eines Dichtrings 19, der in einer Radaufhängung wie in Fig. 1 bis 3 gezeigt verwendet werden kann. Der in entspanntem Zustand gezeigte Ring 19 ist in Umfangsrichtung durch einen Spalt 36 unterbrochen. Durch den Spalt 36 ist es auch dann, wenn der Dichtring 19 aus einem nicht elastisch dehnbarem Material wie Metall, Polyimid oder PTFE besteht, möglich ist, ihn soweit elastisch aufzubiegen, dass er auf die Welle 1 aufgeschoben werden und in eine von deren Nuten 18 einrasten kann. Die Breite des Spalts 36 ist so bemessen, dass, wenn einander beiderseits des Spalts gegenüberliegende Stirnflächen 37 des Dichtrings 19 in Kontakt miteinander gebracht sind, der Durchmesser des Rings soweit verringert ist, dass dieser in die Hülse 5 mit minimalem Spiel hineingeschoben werden kann. So ist im zusammengebauten Zustand die Leckrate des Spalts 36 auf ein Minimum reduziert.

Bei dem in Fig. 5 gezeigten Dichtring 19 sind die einander beiderseits des Spalts 36 gegenüberliegenden Stirnflächen jeweils in zwei in Umfangsrichtung gegeneinander versetzte und über eine zu den Seitenflächen 21, 23 parallele Schulter 38 verbundene Abschnitte 37', 37" unterteilt. Indem die aus entgegengesetzten Richtungen in den Spalt 36 vorspringenden Schultern 38 einander berühren, kann die Leckrate des Dichtrings 19 auch dann minimiert werden, wenn die Breite des Spalts 36 nicht exakt an den Innendurchmesser der Hülse 5 angepasst ist und die sich gegenüberliegenden Stirnflächenabschnitte 37', 37" einander im montierten Zustand nicht berühren.

Die Dichtringe 19 können aus Metall bestehen; insbesondere Grauguss ist geeignet, da das darin enthaltene Graphit ein reibungsarmes Gleiten in Kontakt mit den Seitenflächen 24 der Nuten 18 begünstigt. Kunststoffe wie Polyimid oder PTFE, vorzugsweise ebenfalls mit Graphitanteil in der Matrix, kommen ebenfalls in Betracht. Diese Kunststoffe können den gesamten Ring 19 bilden, sie können aber auch jeweils nur als Oberflächenschicht auf einem Kern aus anderem Material vorgesehen sein.

### Bezugszeichen

- 1: Welle
- 2: Hinterachstrichter
- 3: Wälzlager
- 4:
- 5: Hülse
- 6: Flansch
- 7: Bohrung
- 8: Bohrung
- 9: Leitung
- 10: Wegeventil
- 11: Druckluftquelle
- 12: Leitung
- 13: Wegeventil
- 14:
- 15: Ringraum
- 16: radiale Stichbohrung
- 17: axiale Bohrung
- 18: Nut
- 19: Dichtring
- 20: Außenfläche
- 21: Seitenfläche
- 22: Innenfläche
- 23: Seitenfläche
- 24: Seitenwand
- 25: Boden
- 26: Spalt
- 27: Seitenwand
- 28: Ringraum
- 29: radiale Bohrung
- 30: axiale Bohrung
- 31: Kernwelle
- 32: radseitige Hülse
- 33: radiale Bohrung
- 34: axiale Bohrung
- 35: radiale Bohrung
- 36: Spalt
- 37: Stirnfläche
- 38: Schulter

## Patentansprüche

1. Radaufhängung für ein insbesondere landwirtschaftliches Fahrzeug mit einer karosserieseitigen Hülse (5) und einer in der Hülse (5) drehbaren Welle (1), wobei eine Druckgasdurchführung einen von Hülse (5) und Welle (1) begrenzten Ringraum (15; 28) und in den Ringraum (15; 28) einmündende Kanäle (7, 8; 16, 29) der Hülse (5) und der Welle (1) umfasst, und der Ringraum (15; 28) durch wenigstens einen die Hülse (5) und die Welle (1) berührenden Dichtring (19) abgedichtet ist, **dadurch gekennzeichnet, dass** eine Umfangsfläche (20) des Dichtrings (19) in entspanntem Zustand komplementär zu einer im montierten Zustand von ihr berührten Umfangsfläche der Hülse (5) oder der Welle geformt ist und der Durchmesser der Umfangsfläche (20) im entspannten Zustand so groß wie oder größer als der Durchmesser der von ihr berührten Umfangsfläche der Hülse (5) oder so groß wie oder kleiner als der der Durchmesser der von ihr berührten Umfangsfläche der Welle ist, wobei die Umfangs-fläche (20) des Dichtrings (10) eine Außenfläche ist, und zwischen einer Innenfläche (22) des Dichtrings (19) und einer sich durch den Dichtring (19) erstreckenden Außenfläche (25) der Welle (1) ein Spalt (26) vorhanden ist, wobei die Außenfläche (25) den Boden (25) einer Nut (18) der Welle (1) bildet und der Dichtring (19) an einer Seitenwand (24) der Nut (18) anliegt.

2. Radaufhängung nach Anspruch 1, **dadurch gekennzeichnet, dass** die Umfangsfläche (20) des Dichtrings (19) und die von ihr berührte Umfangsfläche der Hülse (5) oder der Welle im axialen Schnitt parallel und geradlinig verlaufen.

3. Radaufhängung nach Anspruch 1, **dadurch gekennzeichnet, dass** der Dichtring (19) an einer radial orientierten Oberfläche (24) der Welle (1) anliegt.

4. Radaufhängung nach Anspruch 1, **dadurch gekennzeichnet, dass** der Dichtring (19) in der Nut (18) mit axialem Spiel aufgenommen ist.

5. Radaufhängung nach einem der vorhergehenden Ansprüche, **dadurch gekennzeichnet, dass** der Dichtring (19) relativ zur karosserieseitigen Hülse (5) im Wesentlichen drehfest ist.

6. Radaufhängung nach einem der vorhergehenden Ansprüche, **dadurch gekennzeichnet, dass** der Dichtring (19) in Umfangsrichtung unterbrochen ist.

7. Radaufhängung nach Anspruch 6, **dadurch gekennzeichnet, dass** einander gegenüberliegende Stirnflächen (37) des Dichtrings (19) einander im montierten Zustand berühren.

8. Radaufhängung nach einem der vorhergehenden Ansprüche, **dadurch gekennzeichnet, dass** ein Schmierstoffkanal (33, 34, 35) auf eine Innenfläche der karosserieseitigen Hülse (5) mündet.

9. Radaufhängung nach einem der vorhergehenden Ansprüche, **dadurch gekennzeichnet, dass** die Welle (1) eine vorzugsweise massive Kernwelle (31) und eine auf die Kernwelle (32) aufgeschobene radseitige Hülse (32) umfasst und dass der Kanal (16, 17) der Welle (1) in der radseitigen Hülse (32) verläuft.

10. Radaufhängung nach einem der vorhergehenden Ansprüche, **dadurch gekennzeichnet, dass** der Dichtring (19) aus Metall, insbesondere aus Grauguss, besteht.

11. Radaufhängung nach einem der Ansprüche 1 bis 9, **dadurch gekennzeichnet, dass** der Dichtring (19) zumindest an seiner Oberfläche aus Kunststoff, insbesondere Polyimid oder PTFE, besteht.

12. Radaufhängung nach einem der vorhergehenden Ansprüche, **dadurch gekennzeichnet, dass** der Dichtring (19) zumindest an seiner Oberfläche aus einem graphithaltigen Material besteht.

## Claims

1. A wheel suspension for an in particular agricultural vehicle having a sleeve (5) on the body side and a shaft (1) that is rotatable in the sleeve (5), wherein a pressurised gas feedthrough comprises an annular space (15; 28) which is limited by sleeve (5) and shaft (1) and channels (7, 8; 16, 29) opening into the annular space (15; 28) of the sleeve (5) and the shaft (1), and the annular space (15; 28) is sealed by at least one sealing ring (19) touching the sleeve (5) and the shaft (1), **characterized in that** a circumferential surface (20) of the sealing ring (19) in the relaxed state is formed complementarily to a circumferential surface of the sleeve (5) or the shaft touched by it in the assembled state and the diameter of the circumferential surface (20) in the relaxed state is as large or larger than the diameter of the circumferential surface of the sleeve (5) touched by it or as large as or smaller than the diameter of the circumferential surface of the shaft touched by it, wherein the circumferential surface (20) of the sealing ring (10) is an outer surface and that between an inner surface (22) of the sealing ring (19) and an outer surface (25) of the shaft (1) extending through the sealing ring (19) the gap (26) is present, wherein the outer surface (25) forms the bottom (25) of a groove (18) of the shaft (1) and the sealing ring (19) contacts a side wall (24) of the groove (18).

2. The wheel suspension according to Claim 1, **characterized in that** the circumferential surface (20) of the sealing ring (19) and the circumferential surface of the sleeve (5) or of the shaft touched by it run parallel and rectilinearly in the axial section.

3. The wheel suspension according to Claim 1, **characterized in that** the sealing ring (19) contacts a surface (24) of the shaft (1) which is orientated radially.

4. The wheel suspension according to Claim 1, **characterized in that** the sealing ring (19) is received in the groove (18) with axial play.

5. The wheel suspension according to any one of the preceding claims, **characterized in that** the sealing ring (19) relative to the sleeve (5) on the body side is substantially rotationally fixed.

6. The wheel suspension according to any one of the preceding claims, **characterized in that** the sealing ring (19) is interrupted in circumferential direction.

7. The wheel suspension according to Claim 6, **characterized in that** end faces (37) of the sealing ring (19) located opposite one another touch one another in the assembled state.

8. The wheel suspension according to any one of the preceding claims, **characterized in that** a lubricant channel (33, 34, 35) opens onto an inner surface of the sleeve (5) on the body side.

9. The wheel suspension according to any one of the preceding claims, **characterized in that** the shaft (1) comprises a preferentially solid core shaft (31) and a sleeve (32) on the wheel side pushed onto the core shaft (32) and **in that** the channel (16, 17) of the shaft (1) runs in the sleeve (32) on the wheel side.

10. The wheel suspension according to any one of the preceding claims, **characterized in that** the sealing ring (19) consists of metal, in particular of grey cast iron.

11. The wheel suspension according to any one of the Claims 1 to 9, **characterized in that** the sealing ring (19) at least on its surface consists of plastic, in particular polyimide or PTFE.

12. The wheel suspension according to any one of the preceding claims, **characterized in that** the sealing ring (19) at least on its surface consists of a graphite-containing material.

## Revendications

1. Suspension de roue pour un véhicule en particulier agricole, comprenant un manchon côté carrosserie (5) et un arbre (1) tournant dans le manchon (5), un passage de gaz comprimé comprenant un espace annulaire (15 ; 28) délimité par le manchon (5) et par l'arbre (1) et des canaux (7, 8 ; 16, 29) du manchon (5) et de l'arbre (1) débouchant dans l'espace annulaire (15 ; 28), et l'espace annulaire (15 ; 28) étant étanché par l'intermédiaire d'au moins un anneau d'étanchéité (19) touchant le manchon (5) et l'arbre (1), **caractérisée en ce qu'**une surface périphérique (20) de l'anneau d'étanchéité (19) présente à l'état détendu une forme complémentaire à une surface périphérique, touchée par elle, du manchon (5) ou de l'arbre, et le diamètre de la surface périphérique (20) à l'état détendu est égal ou supérieur au diamètre de la surface périphérique, touchée par celle-ci, du manchon (5) ou égal ou inférieur au diamètre de la surface périphérique, touchée par celle-ci, de l'arbre, la surface périphérique (20) de l'anneau d'étanchéité (10) étant une surface extérieure, et entre une surface intérieure (22) de l'anneau d'étanchéité (19) et une surface extérieure (25) de l'arbre (1) traversant l'anneau d'étanchéité (19) existant un interstice (26), la surface extérieure (25) formant le fond (25) d'une gorge (18) de l'arbre (1), et l'anneau d'étanchéité (19) reposant contre une paroi latérale (24) de la gorge (18).

2. Suspension de roue selon la revendication 1, **caractérisée en ce que** la surface périphérique (20) de l'anneau d'étanchéité (19) et la surface périphérique, touchée par elle, du manchon (5) ou de l'arbre s'étendent, en coupe axiale, de manière parallèle et rectiligne.

3. Suspension de roue selon la revendication 1, **caractérisée en ce que** l'anneau d'étanchéité (19) repose contre une surface orientée radialement (24) de l'arbre (1).

4. Suspension de roue selon la revendication 1, **caractérisée en ce que** l'anneau d'étanchéité (19) est logé dans la gorge (18) avec un jeu axial.

5. Suspension de roue selon une des revendications précédentes, **caractérisée en ce que** l'anneau d'étanchéité (19) est sensiblement solidaire en rotation par rapport au manchon côté carrosserie (5).

6. Suspension de roue selon une des revendications précédentes, **caractérisée en ce que** l'anneau d'étanchéité (19) est interrompu dans la direction circonférentielle.

7. Suspension de roue selon la revendication 6, **caractérisée en ce que** des faces frontales (37) de l'anneau d'étanchéité (19) situées en vis-à-vis se touchent à l'état assemblé.

8. Suspension de roue selon une des revendications précédentes, **caractérisée en ce qu'**un canal à lubrifiant (33, 34, 35) débouche sur une surface intérieure du manchon côté carrosserie (5).

9. Suspension de roue selon une des revendications précédentes, **caractérisée en ce que** l'arbre (1) comprend un arbre central de préférence massif (31) et un manchon côté roue (32) enfilé sur l'arbre central (32), et **en ce que** le canal (16, 17) de l'arbre (1) passe dans le manchon côté roue (32).

10. Suspension de roue selon une des revendications précédentes, **caractérisée en ce que** l'anneau d'étanchéité (19) est constitué de métal, en particulier de fonte grise.

11. Suspension de roue selon une des revendications 1 à 9, **caractérisée en ce que** l'anneau d'étanchéité (19) est constitué, au moins sur sa surface, de matière synthétique, en particulier de polyimide ou de PTFE.

12. Suspension de roue selon une des revendications précédentes, **caractérisée en ce que** l'anneau d'étanchéité (19) est constitué, au moins sur sa surface, d'un matériau contenant du graphite.
